# EUROPEAN PATENT APPLICATION

(11) **EP 2 394 745 A1**
(43) Date of publication of application: **14.12.2011**
(21) Application number: 10738418.2
(22) Date of filing: 22.01.2010
(51) Int. Cl.: B05D 1/26, B05C 5/00, B05C 11/00, B05D 3/00, G02B 5/20

(54) **METHOD FOR INSPECTING JETTING STATE OF INKJET HEAD AND APPARATUS FOR INSPECTING JETTING STATE OF INKJET HEAD**

(30) Priority: 04.02.2009 JP 2009023175
(71) Applicant: Seiren Co., Ltd., Fukui-shi Fukui 918-8560 (JP)
(72) Inventor: TAKEUCHI, Tomoya, Fukui-shi Fukui 918-8560 (JP)
(74) Representative: HOFFMANN EITLE
(86) International application number: PCT/JP2010/050760
(87) International publication number: WO 2010/090080

(57) **Abstract**

In an ink application step performed to produce an electronic device using an inkjet method, prior to discharging an ink liquid onto an electronic device base material, an inkjet head (2) is driven to discharge the ink liquid to a highly transparent test film (3) for image reception so as to form a test pattern, (7). An image pickup camera (4), which can move in the direction perpendicular to the scanning direction of the inkjet head (2), and an illumination (5) are arranged below the test film (3), and the test pattern (7) is picked up, while moving the image pick up camera (4) in the direction parallel to the nozzle arrangement of the inject head. The image data of the test pattern (7) obtained by means of the image pickup camera (4) is transferred to an image data processor (21), and an ink liquid discharge defect is detected by means of a test processing section (24).

## Description

### Technical Field

The present invention relates to a production technique of an electronic devices such as a color filter, a liquid crystal panel alignment film, an organic EL element, a thin-film transistor, a wiring substrate, and a microlens and, more particularly, to a test method and a test apparatus of an ink liquid discharge state of an inkjet head which is used for an ink application apparatus for producing an electronic device.

### Background Art

In recent years, with popularization of a personal computer or development of a wide-screen liquid crystal TV, the demand for a liquid crystal display, especially a color liquid crystal display tends to increase. However, the color liquid crystal display is expensive, so that there is an increasing demand for cost reduction of the color liquid crystal display. In particular, a demand for cost reduction of the color filter is high due to a high percentage of the price thereof in the entire product price.

The color filter used in the color liquid crystal display has a coloring pattern of three primary colors of red (R), green (G), and blue (B). In the liquid crystal display, electrodes of a liquid crystal panel corresponding to pixels of R, G, and B are turned ON/OFF. This makes the liquid crystals act as a shutter, and light passes through the pixels of R, G, and B, enabling color display.

As a production method of the color filter, there have conventionally been known various methods such as a staining method, a pigment dispersion method, an electro-deposition method, and a thermoset resin method. In the staining method, a water-soluble high-polymer material for staining is used to form a resin layer on a glass substrate. Then, the resin layer is patterned to a desired shape by a photolithography process. Thereafter, the obtained pattern is immersed in a staining bath to obtain a colored pattern. This process is repeated three times to thereby form a color filter layer of R, G, and B.

In the pigment dispersion method, a photosensitive resin layer in which pigments are dispersed is formed on a substrate. Then, this resin layer is patterned to obtain a monochrome pattern. This process is repeated three times to thereby form a color filter layer of R, G, and B. In the thermoset resin method, pigments are dispersed in the thermoset resin, and printing of R, G and B is performed three times, followed by thermal curing of resin, to thereby form a color filter of the three colors.

In recent years, an organic EL element is now drawing attention due to its potential of producing a full-color flat panel display at a low price. In general, in the production of the organic EL element, when a light-emitting compound is a high-molecular compound, compounds are deposited on a substrate by a spin-coating method. When the light-emitting compound is a low-molecular compound, compounds are deposited on a substrate by a vapor deposition method. In either case, the substrate is coated with a single material, and an organic light-emitting element of a single color is produced. In producing a color display, light-emitting compounds of R, G, and B are used to directly collect a large number of light-emitting layers. Then, the individual light-emitting layers are patterned to thereby form a color display using the organic EL element. Further, when photoresist patterning and etching techniques are used to arrange the light-emitting compounds of R, G, and B close to each other, different colors can be added to the organic EL element.

However, in any of the abovementioned devices, the same process needs to be repeated three times in order to obtain three colors of R, G, and B. Therefore, cost is increased and yield is decreased due to repetition of the same process. In order to solve the above problems, a color filter production method is proposed in which coloring ink is jetted by an inkjet method to form a colored layer (pixel portion) (refer to, e.g., Patent Document 1).

The above inkjet method is simple, low in cost, and uses less ink. However, each ink droplet discharged from a nozzle of an inkjet head is small in volume and large in surface area, so that solvent constituting the ink evaporates easily. Thus, components included in the ink are deposited on the nozzle surface to clog the nozzle, easily preventing the ink from being discharged normally. In order to minimize the occurrence of a defect of the color filter, a method of detecting a state where ink liquid is not discharged from the inkjet head, called discharge defect, is proposed in Patent Document 2.
- Patent Document 1:: Jpn. Pat. Appln. Laid-Open Publication No. 11-240191
- Patent Document 2:: Jpn. Pat. Appln. Laid-Open Publication No. 2008-102311

### Disclosure of the Invention

### Problems to be Solved by the Invention

When ink containing functional materials such as color materials for color filter or a light-emitting compound for organic EL element is applied using the inkjet method in a production process of an electronic device with advancing miniaturization, ink droplets need to be landed onto an electronic device base material with high accuracy. Displacement of the landing position of the ink droplets in the electronic device causes occurrence of defects such as color mixture (or short circuit) and dropout (or disconnection).

However, it is not possible for the above conventional defect detection technique to detect an abnormality in the ink flying direction, called flying curve, caused due to influence of the deposition of ink-containing components on the surface of a nozzle of an inkjet head. Further, when an abnormality occurs in the landing position of the ink droplets due to a component change of ink liquid or a difference in the ink discharge timing, there does not exist a test method of detecting a defect due to the component change, etc.

It is not impossible to detect the abnormality in the ink landing position based on calculation result of the landing position which is obtained based on an image evaluation of a produced electronic device. However, such a defect detection method requires a process of conveying a produced device whose image is to be received to an evaluation means, making it difficult to acquire the absolute position of the actual ink droplet landing position. Further, time loss corresponding to the time required for conveying the produced device whose image is to be received occurs, decreasing production efficiency.

Further, when ink containing functional materials is applied onto the electronic device base material by the inkjet method, it is necessary to control ink discharge amount for each nozzle with high accuracy. A variation in the ink discharge amount for each nozzle, abnormality in the drive voltage of the inkjet head, excessive discharge due to abnormality in ink temperature, flying curve due to nozzle clogging caused by ink, and the like are important factors for determining the quality of the electronic device, so that it is necessary to always test presence/absence of the above factors.

However, the conventional defect detection technique calculates the ink discharge amount and tests whether or not the ink liquid is normally discharged from the inkjet head based on the calculated discharge amount, but does not aim to grasp the absolute discharge amount of the link liquid. That is, the conventional defect detection technique only determines the presence/absence of a defect based on the magnitude relationship between a threshold value set with respect to the dot area and landed droplet and cannot grasp the variation in the discharge amount, excess or lack of the discharge amount, and the like accurately.

An object of the present invention is to provide a test method and a test apparatus capable of accurately performing detection of a defect of the discharge of ink from the inkjet head, which may cause product defect, in an ink application process in an electronic device production process using the inkjet method.

### Means for Solving the Problems

An inkjet head discharge state test method according to the present invention is a method for testing a state of ink liquid discharged from an inkjet head in an ink application step performed to produce an electronic device using an inkjet method. The method is characterized by including: a step of forming a test pattern by discharging the ink liquid from the inkjet head onto a test medium for image reception; a step of pickling up an image of the test pattern using an image pickup unit; and a step of testing a discharge state of the ink liquid using an image evaluation unit based on image data of the test pattern acquired by the image pickup unit. Movement of the test medium for image reception is restricted during a time period between the test pattern formation step and the image pickup step.

In the present invention, in the ink application step performed to produce an electronic device using an inkjet method, a step of testing for checking presence/absence of a discharge defect of the ink liquid off-line is provided, separately from the ink application step for electronic device production, before discharging the ink onto an expensive electronic device base material. That is, a test medium for image reception made of a transparent film or the like is fixed to a test position, ink liquid is discharged onto the test medium to form a test pattern, and an image pickup unit is used to pick up an image of the test pattern. Then, an image evaluation unit is used to calculate the discharge amount, landing position, shape, etc., of the ink liquid from obtained image data and determines/detects whether a nozzle of the inkjet head can discharge the ink liquid normally or not, that is, whether an adequate amount of the ink liquid can be landed accurately onto a predetermined position of the electronic device base material. Further, dot configuration information including information concerning the diameter, area, shape, and gravity center coordinates of each dot of the ink liquid is acquired from the image data and an inkjet head discharge defect such as a variation in the ink discharge amount, displacement of the landing position, defective dot shape, or dust/satellite is detected.

A film having a light transmittance of 50 % or higher may be used as the test medium for image reception. The image pickup unit may have an image pickup camera and an illumination unit for illuminating an image pickup possible area of the image pickup camera. Further, the image pickup camera and illumination unit may be disposed opposite to the inkjet head across the test medium for image reception.

The test pattern may be constituted by dots of the ink liquid discharged from the inkjet head. Further, the image evaluation unit may acquire configuration information of each dot based on the image data, compare the dot configuration information to a previously set threshold, and determine, when a dot configuration information value falls within the threshold range, that an inkjet head corresponding to the dot configuration information is acceptable, while determine, when a dot configuration information value falls outside the threshold range, that the inkjet head is unacceptable. In this case, the dot configuration information may include information concerning the diameter, area, shape, and gravity center of the dot.

The image evaluation unit may calculate, based on the dot configuration information, the difference between the actual landing position of the ink liquid discharged from the inkjet head and ideal landing position so as to calculate a required correction amount concerning the discharge timing of the inkjet head and a required correction amount concerning the position of the inkjet head. Further, the image evaluation unit may calculate, based on the dot configuration information, the average area of all the dots and use a correlation table representing the correlation between the discharge amount and dot area to calculate the discharge amount per one nozzle.

The image evaluation unit may include an image processing section that performs image processing for image data acquired from the image pickup unit and a test processing section that detects a defect in the discharge of the ink liquid based on data obtained after the image processing.

In the test pattern formation step, the ink liquid may be discharged from the inkjet head a plurality of times. Further, the test pattern formation step and the image pickup step may be performed for each inkjet head that discharges the ink liquid of a plurality of types, and movement of the test medium for image reception may be restricted until the test pattern formation step and the image pickup step for the inkjet heads of all types have been completed.

An inkjet head discharge state test apparatus according to the present invention is an apparatus for testing a state of ink liquid discharged from an inkjet head in a step of applying ink to an electronic device base material using an inkjet method. The apparatus is characterized by including: a test medium for image reception on which a test pattern is formed by the ink liquid discharged from the inkjet head; an image pickup unit for picking up an image of the test pattern formed on the test medium for image reception; a medium fixing unit for fixing the test medium for image reception in a testable area within which a landed ink liquid image can be picked up by the image pickup unit; and an image evaluation unit for testing a discharge state of the ink liquid using image data of the test pattern acquired from the image pickup unit.

In the present invention, an inkjet head discharge state test apparatus for performing a test for checking presence/absence of a discharge defect of the ink liquid off-line in an ink application step performed to produce an electronic device using an inkjet method, separately from an ink application step for electronic device production, before discharging the ink onto an expensive electronic device base material. In the inkjet head discharge state test apparatus, a test medium for image reception made of a transparent film or the like is fixed to a test position, ink liquid is discharged onto the test medium to form a test pattern, and an image pickup unit is used to pick up an image of the test pattern. Then, an image evaluation unit is used to calculate the discharge amount, landing position, shape, etc., of the ink liquid from obtained image data and determines/detects whether a nozzle of the inkjet head can discharge the ink liquid normally or not, that is, whether an adequate amount of the ink liquid can be landed accurately onto a predetermined position of the electronic device base material . Further, dot configuration information including information concerning the diameter, area, shape, and gravity center coordinates of each dot of the ink liquid is acquired from the image data and an inkjet head discharge defect such as a variation in the ink discharge amount, displacement of the landing position, defective dot shape, or dust/satellite is detected.

### Advantages of the Invention

According to the inkjet head discharge state test method of the present invention, a step of testing for checking presence/absence of a discharge defect of the ink liquid off-line is performed, separately from an ink application step for electronic device production. With this configuration, a defective nozzle can previously be identified to prevent production of a defective electronic device, thereby minimizing a risk of producing the defective electronic device. Further, it is possible to reliably identify which nozzle is a defective nozzle as well as to reliably grasp a cause of the discharge defect, allowing appropriate responses, such as maintenance and replacement of the head, for the cause of the defect to be made.

According to the inkjet head discharge state test apparatus of the present invention, the apparatus performs a test for checking presence/absence of a discharge defect of the ink liquid off-line, separately from an ink application step for electronic device production. With this configuration, a defective nozzle can previously be identified to prevent production of a defective electronic device, thereby minimizing a risk of producing the defective electronic device. Further, it is possible to reliably identify which nozzle is a defective nozzle as well as to reliably grasp a cause of the discharge defect, allowing appropriate responses, such as maintenance and replacement of the head, for the cause of the defect to be made.

### Brief Description of the Drawings

FIG. 1 is an explanatory view illustrating a configuration of an apparatus for testing a discharge state of an inkjet head which is one embodiment of the present invention.
FIG. 2 is an explanatory view illustrating a configuration of a film conveyance mechanism.
FIG. 3 is an explanatory view illustrating an example of a picked up image of a test pattern.
FIG. 4 is an explanatory view illustrating a correlation between the discharge amount and ink dot area.
FIG. 5 is an explanatory view illustrating an example of the dust, satellite, and a defective shape of an ink dot.

### Explanation of Reference Symbols

- 1:: Discharge test apparatus

- 2:: Inkjet head
- 3:: High-transmittance test film for image reception (test medium for image reception)
- 4:: Image pickup camera (image pickup unit)
- 5:: Illumination (image pickup unit, illumination unit)
- 6:: Testable area
- 7:: Test pattern
- 10:: Film conveyance mechanism (medium fixing unit)
- 11a, 11b:: Motor
- 12a, 12b:: Conveyance roller
- 13a, 13b:: Idle roller
- 14:: Tension gauge
- 21:: Image data processing unit (image evaluation unit)
- 22:: Image processing section
- 23:: Control section
- 24:: Test processing section
- 25:: Threshold storage section
- 26:: Test result output section
- 31:: Ink dot
- 32:: Dust
- 33:: Satellite
- 34R, 34G, 34B:: Sub-pixel area
- 35:: Main dot
- 36:: Sub-pixel

### Best Mode for Carrying Out the Invention

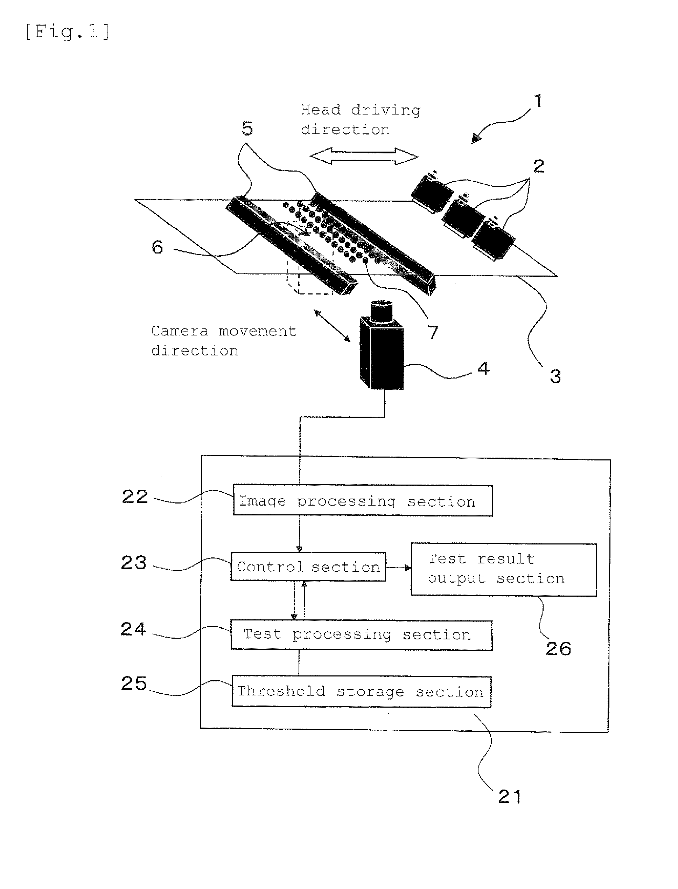

An embodiment of the present invention will be described in detail below with reference to the accompanying drawings. FIG. 1 is an explanatory view illustrating a configuration of an apparatus for tasting a discharge state of an inkjet head (hereinafter, abbreviated as discharge test apparatus) which is one embodiment of the present invention. The discharge test apparatus 1 of FIG. 1 is used for an ink application apparatus for electronic device production that prints a desired pattern onto an electronic device base material such as a transparent substrate for color filter, a substrate for an organic EL element, or the like by the inkjet method. The discharge test apparatus 1 tests a discharge state of ink liquid from a nozzle of an inkjet head 2 (hereinafter, abbreviated as head 2) and determines whether the nozzle is acceptable or not. The discharge test apparatus 1 is disposed on a part of the ink application apparatus for electronic device production. FIG. 1 illustrates only a part corresponding to the discharge test apparatus 1 in the ink application apparatus for electronic device production.

The discharge test apparatus 1 of FIG. 1 includes a high-transmittance test film 3 for image reception (test medium for image reception, hereinafter abbreviated as test film 3), image pickup camera 4 (hereinafter abbreviated as camera 4) which is an image pickup unit, and illumination (illumination unit) 5. The discharge test apparatus 1 discharges ink liquid from the head 2 onto the test film 3 and uses the camera 4 to pick up a landed ink liquid image so as to test an ink liquid discharge state. A testable area 6 is provided in the discharge test apparatus 1. Within the testable area 6, the landed ink liquid image can be picked up and detected by the camera 4 effectively. The testable area 6 is disposed adjacently to an actual print area (area in which printing is actually performed with respect to an electronic device base material) in the ink application apparatus for electronic device production. The head 2 is capable of freely moving between the testable area 6 and the actual print area. It should be noted that an illustration of the actual print area is omitted in FIG. 1.

As illustrated in FIG. 1, the testable area 6 is set in the forward position in the head driving direction. Within the testable area 6, the camera 4 and illumination 5 are disposed below the test film 3. The camera 4 is configured to move within the testable area 6 in the direction perpendicular to the driving direction of the head 2. As the camera 4, a CCD camera, for example, is used. When the camera 4 is used for discharge test of the inkjet head of the ink application apparatus for electronic device production, the pixel resolving power thereof is preferably 2 µm or less, although it depends on the measurement accuracy of the discharge amount of ink from the head 2 or measurement accuracy of the ink landing position.

The illumination 5 is an illumination unit for illuminating a test pattern 7 printed in the testable area 6 by the head 2. Examples of a light source of the illumination 5 may include various types of a light source such as an LED lamp, a halogen lamp, a metal halide lamp, a xenon lamp, a fluorescent lamp. That is, the type of the light source is not especially limited as long as required brightness can be obtained. Further, if sufficient brightness can be ensured, the illumination 5 may be formed into a dot-like illumination unit in place of the linear-shaped illumination unit as illustrated in FIG. 1. In this case, the dot-like illumination unit is driven in synchronization with the camera 4.

The test film 3 is a transparent synthetic resin film. An ink liquid receptive layer has been applied onto the test film 3. When ink liquid discharged from each nozzle of the head 2 is landed onto the receptive layer, the ink liquid assumes a dot-like shape on the receptive layer. The light transmittance of the test film 3 may be a value at which, when the camera 4 is used to pick up an image of the test pattern 7, the dot of the ink liquid landed onto the test film 3 can be identified based on a threshold value set for the brightness value of an image. However, the light transmittance of the test film 3 is preferably 50 % or more for obtaining a high-contrast image of the ink liquid.

The distance between the test film 3 and nozzle of the head 2 needs to be equal to the distance between the nozzle and electronic device base material in order to acquire accurate discharge information. Further, the test film 3 needs to be fixed in order to achieve a flatness at which the distance between the nozzle and test film 3 is kept constant at least within the testable area 6. Further, when considering that a discharge test step is performed before an ink application step for electronic device production, it is preferable that the discharge test apparatus 1 can successively perform steps of fixing and removing the test film 3.

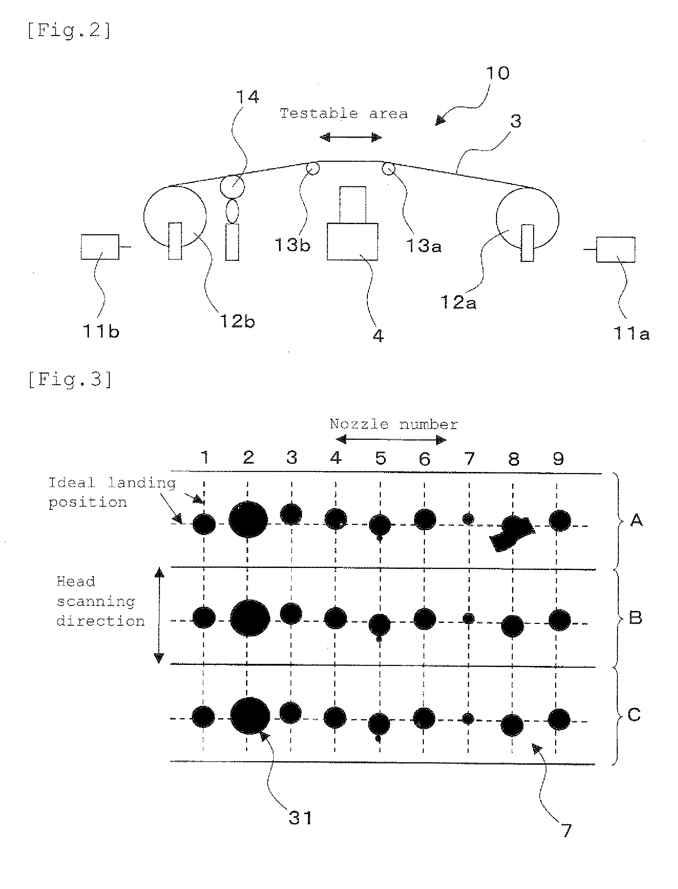

In order to satisfy the abovementioned requirements, the discharge test apparatus 1 uses an R to R (Roll to Roll) film conveyance mechanism (medium fixing unit) 10 as illustrated in FIG. 2. In this film conveyance mechanism 10, the distance between a frame, etc., for supporting the head 2 and the test film 3 is set equal to the distance between the frame, etc., in the actual print area and the electronic device base material. Further, a test printing can be performed under the same print conditions such as the operating speed of the head 2 as in the actual printing. That is, in the discharge test apparatus 1, there is no difference as to an ink landing state between the test printing and actual printing.

As illustrated in FIG. 2, the film conveyance mechanism 10 has conveyance rollers 12a and 12b driven respectively by motors 11a and 11b. Idle rollers 13a and 13b are provided in the testable area 6. The test film 3 is stretched between the conveyance rollers 12a and 12b through the idle rollers 13a and 13b. The film conveyance mechanism 10 has a tension gauge 14 which is provided so as to be brought into contact with the test film 3. The tension gauge 14 detects the tension of the test film 3. The motors 11a and 11b are appropriately driven such that the tension of the test film 3 becomes a target value for fixing the test film 3 with a predetermined tension. As a result, in the testable area 6, the test film 3 is fixed between the idle rollers 13a and 13b with a predetermined flatness.

The camera 4 is connected to an image data processor (image evaluation unit) 21. The image data processor 21 analyzes a picked-up landed ink liquid image to determine whether the nozzle is acceptable or not. As illustrated in FIG. 1, the image data processor 21 includes an image processing section 22, a control section 23, and a test processing section 24. The image processing section 22 acquires image data sent from the camera 4 and performs predetermined pre-test processing. The test processing section 24 analyzes the image data that has been subjected to the pre-test processing by the image processing section 22 to calculate information concerning an ink liquid discharge state. The controller 23 acquires the image data from the image processing section 22 as well as exchanges data with the test processing section 24 to determine whether each nozzle is acceptable or not.

The image processing section 22 performs, as image processing in the pre-test processing, digitizing processing of analog image data, foreign matter removal, and noise removal. The image data that has been subjected to the pre-processing by the image processing section 22 is sent to the control section 23. The test processing section 24 takes out the image data from the control section 23 and performs discharge test processing. At this time, the image data is compared to a reference value stored in a threshold storage section 25, and the ink liquid discharge state information for each nozzle is created. The control section 23 acquires the discharge state information and determines whether each nozzle is acceptable or not. The determination result is output from the control section 23 to a test result output section 26.

Next, the test processing performed in the discharge test apparatus 1 having the above configuration will be described, taking an ink application step for a color filter as an example. First, the film conveyance mechanism 10 is driven, and the test film 3 is set at a predetermined tension. After the test film 3 has been set, the head 2 is driven to discharge ink liquid from the nozzle within the testable area 6 to form the test pattern 7 on the test film 3. The ink liquid is discharged from the heads 2 of respective colors of R, G, and B plurality of times (e.g., three times) for each color. That is, a number of dots of the ink liquid corresponding to [number of nozzles x number of times of discharge] are formed in a single head scan operation. The reason for performing the discharge of the ink liquid a plurality of times is to obtain a plurality of samples for increasing data accuracy. Thus, the number of times itself of discharge of the ink liquid is not especially restricted or limited.

The testable area 6 is set within the visual field of the camera 4. Thus, the test pattern 7 is formed so as to lie within the visual field of the camera 4. After the formation of the test pattern 7, the camera 4 is used to pick up an image of the test pattern 7 with the illumination 5 turned on. The nozzles of the head 2 are arranged in the direction substantially perpendicular to the driving direction of the head 2 and, accordingly, the test pattern 7 is formed along the direction substantially perpendicular to the head deriving direction. In the discharge test apparatus 1, the camera 4 is moved in the direction perpendicular to the head driving direction to thereby pick up an image of the entire test pattern 7 in a single scanning operation.

The picked-up image data of the test pattern 7 is sent to the image processing section 22. The image data is subjected to the pre-test processing by the image processing section 22 and then transferred to the control section 23. The control section 23 sends the image data to the test processing section 24. The image data is subjected to detection and classification in the test processing section 24 and, thereby, the ink liquid discharge state information is formed. The control section 23 receives the discharge state information from the test processing section 24 and determines whether each nozzle is acceptable or not. FIG. 3 is an explanatory view illustrating an example of a picked up image of the test pattern 7. The pattern of FIG. 3 is obtained by discharging the ink liquid three times from nine nozzles (three heads each having three nozzles) of the R-color heads.

As illustrated in FIG. 3, landed ink dots 31 have different diameters, areas, shapes, gravity centers, and the like. The test processing section 24 acquires the diameter, area, and the like from each nozzle as dot configuration information. Based on the dot configuration information, the test processing section 24 performs the following tests for respective ranges of A to C: variation in the discharge amount ((1) discharge amount test), (2) landing position test, and (3) dust/satellite/shape test. Based on the test result, the control section 23 identifies a discharge-defective nozzle. The image data may contain a foreign matter that could not have been removed in the pre-processing as illustrated in the range A of an eighth nozzle of FIG. 3. Thus, in creating the dot configuration information, the test processing section 24 identifies a target nozzle as a defective nozzle when a discharge defect occurs in all or two of the ranges A to C of the target nozzle.

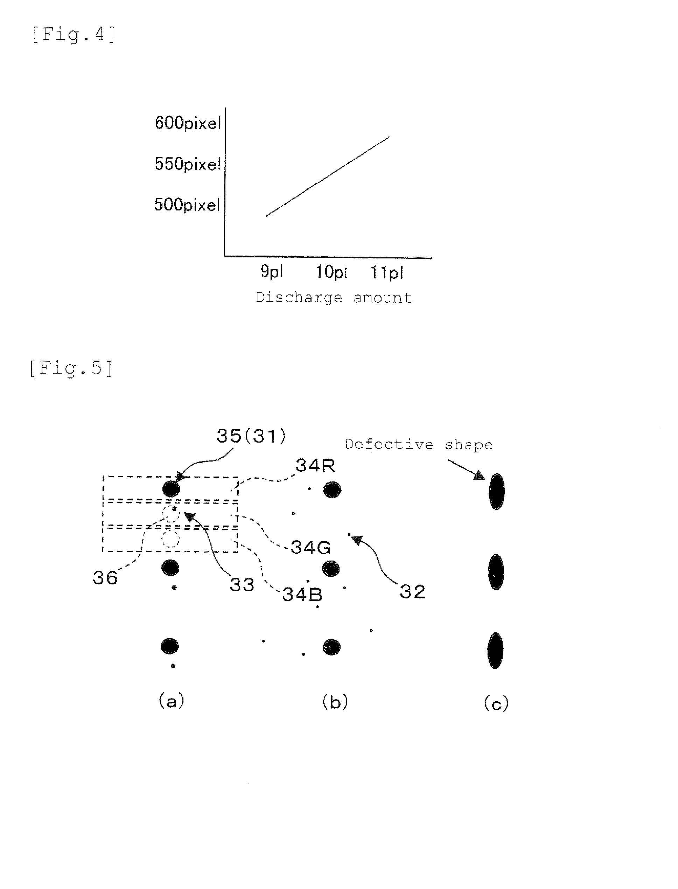

(1) In the discharge amount test, the diameters and areas of the landed ink dots 31 discharged from all the nozzles are calculated. The calculated values are compared to threshold values previously stored in the threshold storage section 25. There is a correlation as indicated by FIG. 4 between the discharge amount and ink dot area and, based on this correlation of FIG. 4, the ink dot area corresponding to the required discharge amount is set. The control section 23 determines excess or shortage of the ink discharge amount based on a threshold set for the above setting value to determine whether the nozzle is acceptable or not. When the excess or shortage of the ink discharge amount occurs, a variation in the discharge amount is also calculated. The correlation data between the discharge amount and ink dot area depends upon the type of the test film 3 or ink. Thus, when the test film 3 or ink is replaced with a different type, the correlation data needs to be newly created.

(2) In the landing position test, the gravity centers of all the ink dots 31 are calculated. Then, for all the ink dots 31, a difference from a previously set ideal landing position is calculated in terms of nozzle arrangement direction and head scanning direction. In this landing position test, it is determined whether or not the difference (displacement) from the ideal landing position falls within a preset tolerance. When the difference falls within the tolerance, the target nozzle is determined as "acceptable", while when the difference falls outside the tolerance, the target nozzle is determined as "unacceptable". Further, based on the displacement from the ideal landing position, a. required correction amount concerning the ink liquid discharge timing or head position is calculated.

(3) In the dust/satellite/shape test, for all the ink dots 31, the diameter, area, shape, and gravity center coordinate of the dust or satellite are calculated. Then, it is checked for each of the ink dots 31 whether the dust, satellite, and the shapes of the dot are appropriate or not. The "dust" mentioned here refers to irregular dirt due to splash of ink caused mainly by contamination of the nozzle part. Further, the "satellite" refers to regular dirt due to ink liquid separation caused by a defect of ink viscosity and discharge pressure of ink from the nozzle.

FIG. 5 is an explanatory view illustrating an example of the dust, satellite, and a defective shape of the ink dot. As illustrated in FIG. 5, there may be a case where dust 32 and satellite 33 are scattered around a main dot 35. The dust 32 and satellite 33 can be ignored as long as they are not mixed in sub-pixels of the other color or when the discharge amount thereof is small even if mixed in the sub-pixels of the other colors. However, in the case where the mixing of the dust 32 and satellite 33 reaches a level that cannot be ignored, which may involve a defective product, so the relevant nozzle is determined to be unacceptable. The sub-pixels of respective colors are, as indicated by dotted frames in FIG. 5(a), formed in substantially rectangular sub-pixel areas 34R, 34G, and 34B, wherein sub-pixels 36 of the other colors are arranged vertically between the main dots 35. That is, in FIG. 5, three main dots 35 of the same color (in this example, R) are arranged vertically, and sub-pixels of the other colors (G, B) are arranged vertically between the main dots 35.

Then, the discharge amount of the dust 32 and satellite 33, distance between the dust 32 and main dot 35, distance between the satellite 33 and main dot 35, and defective shape of the ink dot are compared to threshold values respectively set for the above parameters to thereby determine whether each nozzle is acceptable or not. Then, in the case where the discharge amount of the dust or satellite is small enough to be ignored even if it is mixed in the sub-pixels of the other colors, or in the case where the dust or satellite is not mixed in the sub-pixels of the other colors, or in the case where the main dot has defective shape but it is not mixed in the sub-pixels of the other colors, the relevant nozzle is determined to be "acceptable". On the other hand, in the case where the dust, satellite, or defective shape influences the sub-pixels of the other colors, the relevant nozzle is determined to be "unacceptable". For example, the satellite 33 of FIG. 5(a) is mixed in the sub-pixel area of the other color, and the discharge amount thereof is large, so that the relevant nozzle is determined to be "unacceptable". The dust 32 of FIG. 5(b) is small in the discharge amount but a lot of dusts 32 are mixed in the sub-pixel areas of the other colors, so that the relevant nozzle is determined to be "unacceptable". The main dot 35 of FIG. 5(c) falls outside the threshold in terms of deformation degree, so that the relevant nozzle is determined to be "unacceptable".

When the above tests are performed for the test pattern 7 of FIG. 3, for example, the following determination results are obtained.
1: Acceptable -substantially ideal landed ink
2: Unacceptable for excess discharge
3: Unacceptable for displacement
4: Acceptable -displacement is within threshold
5: Unacceptable for excess discharge of satellite
6: Same as No. 4
7: Unacceptable for shortage of discharge
8: Acceptable -displacement is within threshold (determined by B and C since foreign matter exists in A)
9: Acceptable -displacement is within threshold
That is, in the test pattern of FIG. 3, five nozzles of Nos. 1, 4, 6, 8, and 9 are determined as acceptable.

These test results are output to the test result output section 26 by the control suction 23, and a state (acceptable or unacceptable) of each nozzle is displayed on a monitor or the like. Then, after discharge tests of the nozzles of the heads 2 of respective colors of R, G, and B are performed, the motors 11a and 11b of the film conveyance mechanism 10 are driven to convey the test film 3. That is, the test film 3 is not moved until the tests of the heads 2 of R, G, and B have been completed but kept in a fixed state. The print of the test pattern 7 is performed in a very minute area, so that the test print is performed plurality of times for each of the plurality of heads, and image pickup and subsequent determination are performed before the movement of the test film 3. The reason for this is that when the test film 3 is moved before all the discharge operations of the heads of respective colors have been completed, the test accuracy may decrease. As a result, it is possible to avoid the influence of the film movement accuracy and thereby to enable high accuracy discharge test processing by ensuring the movement accuracy of the camera 4.

As described above, in the discharge test apparatus 1 according to the present invention, multi-sided information (non-discharge, non-uniform discharge amount, displacement of landing position, dust/satellite, etc.) concerning discharge defect of the ink liquid can be acquired, making it possible to identify a defective nozzles with high accuracy. Therefore, it is possible to prevent production of a defective electronic device to thereby minimize a risk of producing the defective electronic device. Further, it is possible to reliably identify which nozzle is a defective nozzle as well as to reliably grasp a cause of the discharge defect, allowing appropriate responses, such as maintenance and replacement of the head, for the cause of the defect to be made. In addition, in the case where the actual landing position is displaced from the ideal landing position, a displacement amount of the actual landing position from the ideal landing position can be calculated for each nozzle. Further, a variation in the discharge amount can be calculated from the dot area. Thus, by appropriately correcting the landing position and/or discharge amount, a high-quality electronic device can be produced.

The present invention is not limited to the above embodiment but may be variously modified without departing from the scope and spirit of the invention.
For example, although the camera 4 is driven so as to pick up an image of the test pattern 7 in the above embodiment, a configuration may be adopted in which a plurality of cameras are fixedly set so as to pick up an image of the test pattern 7. The shape of the camera 4 is not especially limited, but the camera itself may be an area camera or a line sensor camera.

## Claims

1. An inkjet head discharge state test method for testing a state of ink liquid discharged from an inkjet head in an ink application step performed to produce an electronic device using an inkjet method, **characterized by** comprising:
a step of forming a test pattern by discharging the ink liquid from the inkjet head onto a test medium for image reception;
a step of picking up an image of the test pattern using an image pickup unit; and
a step of testing a discharge state of the ink liquid using an image evaluation unit based on image data of the test pattern acquired by the image pickup unit,
movement of the test medium for image reception being restricted during a time period between the test pattern formation step and the image pickup step.

2. The inkjet head discharge state test method according to claim 1, **characterized in that**
a film having a light transmittance of 50 % or higher is used as the test medium for image reception.

3. The inkjet head discharge state test method according to claim 1, **characterized in that**
the image pickup unit has a image pickup camera and an illumination unit for illuminating an image pickup possible area of the image pickup camera, and
the image pickup camera and the illumination unit are disposed opposite to the inkjet head across the test medium for image reception.

4. The inkjet head discharge state test method according to claim 1, **characterized in that**
the test pattern is constituted by dots of the ink liquid discharged from the inkjet head, and
the image evaluation unit acquires configuration information of each dot based on the image data, compares the dot configuration information to a previously set threshold, and determines, when a dot configuration information value falls within the threshold range, that an inkjet head corresponding to the dot configuration information is acceptable, while determines, when a dot configuration information value falls outside the threshold range, that the inkjet head is unacceptable.

5. The inkjet head discharge state test method according to claim 4, **characterized in that**
the dot configuration information includes information concerning the diameter, area, shape and the position of a gravity center of the dot.

6. The inkjet head discharge state test method according to claim 4, **characterized in that**
the image evaluation unit calculates, based on the dot configuration information, the difference between the actual landing position of the ink liquid discharged from the inkjet head and ideal landing position so as to calculate a required correction amount concerning the discharge timing of the inkjet head and a required correction amount concerning the position of the inkjet head.

7. The inkjet head discharge state test method according to claim 4, **characterized in that**
the image evaluation unit calculates, based on the dot configuration information, the average area of all the dots and uses a correlation table representing the correlation between the discharge amount and dot area to calculate the discharge amount per one nozzle.

8. The inkjet head discharge state test method according to claim 1, **characterized in that**
the image evaluation unit includes an image processing section that performs image processing for image data acquired from the image pickup unit and a test processing section that detects a defect of the discharge of the ink liquid based on data obtained after the image processing.

9. The inkjet head discharge state test method according to claim 1, **characterized in that**
in the test pattern formation step, the ink liquid is discharged from the inkjet head a plurality of times.

10. The inkjet head discharge state test method according to claim 1, **characterized in that**
the test pattern formation step and the image pickup step are performed for each inkjet head that discharges the ink liquid of a plurality of colors, and movement of the test medium for image reception is restricted until the test pattern formation step and image pickup step for the inkjet heads of all colors have been completed.

11. An inkjet head discharge state test apparatus for testing a state of ink liquid discharged from an inkjet head in an ink application step performed to produce an electronic device using an inkjet method, **characterized by** comprising:
a test medium for image reception on which a test pattern is formed by the ink liquid discharged from the inkjet head;
an image pickup unit for picking up an image of the test pattern formed on the test medium for image reception;
a medium fixing unit for fixing the test medium for image reception in a testable area within which a landed ink liquid image can be picked up by the image pickup unit; and
an image evaluation unit for testing a discharge state of the ink liquid using image data of the test pattern acquired from the image pickup unit.
